# EUROPEAN PATENT APPLICATION

(11) **EP 2 821 510 A1**
(43) Date of publication of application: **07.01.2015**
(21) Application number: 13754559.6
(22) Date of filing: 27.02.2013
(51) Int. Cl.: C21D 1/60

(54) **WATER-BASED COOLANT**

(30) Priority: 02.03.2012 JP 2012046191
(71) Applicant: Idemitsu Kosan Co., Ltd, Tokyo 100-8321 (JP)
(72) Inventor: HASEGAWA, Mayu, Chiba 2990107 (JP); GOTO, Masahisa, Chiba 2990107 (JP); ICHITANI, Katsumi, Chiba 2990107 (JP); NOGUCHI, Kenro, Chiba 2990107 (JP)
(74) Representative: Hoffmann Eitle
(86) International application number: PCT/JP2013/055111
(87) International publication number: WO 2013/129467

(57) **Abstract**

A water-based coolant contains at least one inorganic acid salt of phosphate, phosphite, sulfate, sulfite, borate, molybdate, tungstate, carbonate, hydrogen carbonate and sesquicarbonate. Since the water-based coolant of the invention exhibits a high cooling capability but does not easily corrode a metallic material (a cooling object), the water-based coolant of the invention is suitable as a quenching oil or a cutting oil for the metallic material.

## Description

### TECHNICAL FIELD

The present invention relates to a water-based coolant, specifically, used for quenching and the like of metallic parts.

### BACKGROUND ART

A coolant (heat treatment liquid) used for quenching of metallic parts is roughly classified into an oil-based coolant and a water-based (aqueous solution-type) coolant. The oil-based heat treatment liquid is widely used. This is because the oil-based heat treatment liquid has an adequate cooling capability to reduce quenching distortion and avoid generation of quenching cracks.

On the other hand, the oil-based heat treatment liquid exhibits a slow cooling speed and an insufficient cooling capability to particularly large metallic parts and poorly quenchable metallic parts. Accordingly, the water-based heat treatment liquid is used for such parts. However, since the water-based heat treatment liquid exhibits a higher cooling capability than the oil-based heat treatment liquid, uneven cooling easily occurs, which may cause quenching cracks.

Accordingly, in order to prevent quenching cracks, a composition provided by adding a water-soluble polymer to a water-based heat treatment liquid has been known. Such a water-based heat treatment liquid composition inhibits heat transfer and suppresses cooling capability since the water-soluble polymer is attached to surfaces of the metallic parts. The water-based heat treatment liquid composition added with the water-soluble polymer has been industrially widespread, in which polyalkyleneglycol (PAG) is mainly used as the water-soluble polymer. However, the water-based heat treatment liquid composition has a long vapor blanket stage, thereby easily causing uneven cooling.

In view of the above, a water-based heat treatment liquid composition provided by adding glycol having a low molecular weight to polyalkylene glycol having a high molecular weight to shorten the vapor blanket stage and improve uneven-cooling resistance has been proposed (see Patent Literature 1). A water-based heat treatment liquid provided by blending an alkali metal salt of carboxylic acid or sulfonic acid in a water-soluble polyoxyalkylene derivative has also been proposed (see Patent Literature 2).

On the other hand, quenching using a saline solution has been known for a long time as a technique of improving the uneven-cooling resistance. Since the saline solution has no vapor blanket stage, the saline solution exhibits a high uneven-cooling resistance as well as a high cooling capability, thereby reducing quenching cracks (see Non-Patent Literature 1).

### CITATION LIST

### PATENT LITERATURES

Patent Literature 1: JP-A-9-227932
Patent Literature 2: JP-A-6-336607

### NON-PATENT LITERATURE

Non-Patent Literature 1: "Yaki-ware wo kangaeru (consideration of quenching cracks)" edited by Shigeo OWAKU, Heat Treatment, published in June in Showa 42-nen (1967), the seventh volume, Issue No. 3, pp. 140-144

### SUMMARY OF THE INVENTION

### PROBLEMS TO BE SOLVED BY THE INVENTION

However, the water-based heat treatment liquids of Patent Literatures 1 and 2 exhibit an insufficient cooling speed. It is speculated that such an insufficient cooling speed is intended for achieving a feature of an oil-based quenching oil, in other words, for slowly cooling a region in danger of generating quenching cracks. On the other hand, the saline solution of Non-Patent Literature 1 generates rust in quite a short time of one hour or less after a heat treatment, resulting in a significant corrosion to equipment such as an oil bath. Accordingly, the saline solution of Non-Patent Literature 1 is hardly usable for industrial purpose.

An object of the invention is to provide a water-based coolant that exhibits a high cooling capability but does not easily corrode a metallic material (a cooling object).

### MEANS FOR SOLVING THE PROBLEMS

In order to solve the above-mentioned problems, according to the invention, there is provided a water-based coolant described below.
(1) According to an aspect of the invention, a water-based coolant contains at least one inorganic acid salt selected from the group consisting of phosphate, phosphite, sulfate, sulfite, borate, molybdate, tungstate, carbonate, hydrogen carbonate and sesquicarbonate.
(2) In the water-based coolant according to the above aspect of the invention, the inorganic acid salt is a metal salt of an inorganic acid.
(3) In the water-based coolant according to the above aspect of the invention, the inorganic acid salt is at least one of a sodium salt, a potassium salt, a calcium salt and a magnesium salt.
(4) In the water-based coolant according to the above aspect of the invention, a content of the inorganic acid salt is in a range of 1 mass% to 20 mass% of a total amount of the coolant.
(5) In the water-based coolant according to the above aspect of the invention, the phosphate is at least one of orthophosphate, hydrogen phosphate, dihydrogenphosphate, polyphosphate and metaphosphate.
(6) In the water-based coolant according to the above aspect of the invention, the water-based coolant is a quenching oil or a cutting oil.

According to the invention, a water-based coolant that exhibits a high cooling capability but does not easily corrode a metallic material (a cooling object) can be provided.

### DESCRIPTION OF EMBODIMENT(S)

A water-based coolant according to an exemplary embodiment (hereinafter, occasionally simply referred to as "the present coolant") is an aqueous solution provided by blending a predetermined inorganic acid salt. The present coolant will be described below in detail.

Examples of the inorganic acid salt used for the present coolant includes phosphate, phosphite, sulfate, sulfite, borate, molybdate, tungstate, carbonate (except for calcium carbonate), hydrogen carbonate and sesquicarbonate. The above inorganic acid salts may be used alone or mixed in use.

Among the above inorganic acid salts, phosphate is preferable in view of a cooling effect. Phosphate may be any one of orthophosphate, hydrogenphosphate, dihydrogenphosphate, polyphosphate and metaphosphate. Examples of polyphosphate include diphosphate (pyrophosphate) and tripolyphosphate. Among the above polyphosphate, pyrophosphate is preferable in view of the cooling effect.

The inorganic acid salt is preferably a metal salt, specific examples of which include a sodium salt, a potassium salt, a calcium salt and a magnesium salt. Among the above metal salts, a sodium salt and a potassium salt are preferable in view of the cooling effect.

pH of the present coolant is preferably 7 or more in terms of corrosion prevention.

A content of the inorganic acid salt in the present coolant is preferably in a range of 1 mass% to 20 mass%, more preferably in a range of 3 mass% to 15 mass%. When the content of the inorganic acid salt is less than 1 mass%, the cooling effect may become insufficient. On the other hand, even when the content of the inorganic acid salt exceeds 20 mass%, an improvement in the cooling effect is not so expected.

The present coolant may be further blended with a water-soluble rust inhibitor and a metal corrosion inhibitor as needed.

In view of an improvement in rust resistance and economical balance, a content of the water-soluble rust inhibitor is preferably in a range of 0.01 mass% to 5 mass% of the total amount of the coolant, more preferably of 0.03 mass% to 1 mass%. Examples of the water-soluble rust inhibitor include: aliphatic monocarboxylates such as octanate; and aliphatic dicarboxylates such as octanedioic acid salt (suberate) and decanedioic acid salt (sebacate), among which potassium sebacate and the like are preferably used. Note that aromatic carboxylates may be used as the water-soluble rust inhibitor. A piperazine derivative such as monohydroxy monoethyl piperazine may also be preferably used as the water-soluble rust inhibitor.

As the metal corrosion inhibitor, a benzotriazole compound, a benzimidazole compound, a benzothiazole compound and a benzothiadiazole compound and the like are preferably usable. The above metal corrosion inhibitors may be used alone or mixed in use.

Herein, the benzotriazole compound refers to benzotriazole and a derivative thereof. The same applies to the benzimidazole compound, the benzothiazole compound and the benzothiadiazole compound. Examples of the benzotriazole compound include: alkylbenzotriazole in which a benzene ring is substituted with an alkyl group; and (alkyl)aminoalkylbenzotriazole in which hydrogen of an amino group is further substituted with an alkyl group. A content of the metal corrosion inhibitor is preferably in a range of 0.01 mass% to 1 mass% of the total amount of the coolant, more preferably in a range of 0.1 mass% to 0.7 mass%. When the content of the metal corrosion inhibitor is less than 0.01 mass%, a metal corrosion prevention effect may become insufficient. On the other hand, even when the content of the metal corrosion inhibitor exceeds 1 mass%, an improvement in the metal corrosion prevention effect is not so expected.

The present coolant may also be blended with a generally usable additive such as an antioxidant and a detergent dispersant.

Since the present coolant exhibits a high cooling capability but does not easily corrode a metallic material (a cooling object), the present coolant is suitable as a quenching oil or a cutting oil for the metallic material.

### Examples

Now, the invention will be further described in detail with reference to Examples and Comparatives, which by no means limit the invention.

### Examples I to 13 and Comparatives 1 to 8

As shown in Table 1, various additives (e.g., inorganic acid salt) were dissolved in an ion-exchanged water to prepare water-based coolants as sample liquids. A concentration of each of the additives was set at 10 mass% of each of the sample liquids unless otherwise described. In Examples 12 and 13, sodium hydrogencarbonate was added by the respective amounts shown in Table 1.

A cooling test was conducted for each of the sample liquids in accordance with JIS K2242B method while keeping each of the sample liquids at 50 degrees C. Specifically, a time (second) until reaching a temperature (characteristic temperature) at which a vapor blanket stage terminated was measured in a cooling curve. The results are shown in Table 1. pH of each of the aqueous solutions is also shown in Table 1.

**Table 1**

| | Additive | Characteristic Time (sec) (50°C) | pH | Remarks |
|---|---|---|---|---|
| Example 1 | sodium tripolyphosphate | 0.21 | 8.48 | |
| Example 2 | disodium hydrogenphosphate | 0.15 | 8.82 | |
| Example 3 | potassium pyrophosphate | 0.1 or less | 10.10 | |
| Example 4 | sodium metaphosphate | 0.74 | 5.62 | |
| Example 5 | sodium sulfite | 0.25 | 9.08 | |
| Example 6 | sodium sulfate | 0.20 | 7.12 | |
| Example 7 | sodium borate | 0.31 | 11.84 | |
| Example 8 | sodium molybdate ¹⁾ | 0.24 | 7.74 | |
| Example 9 | sodium tungstate ¹⁾ | 1.27 | 9.00 | |
| Example 10 | sodium carbonate | 0.1 or less | 10.20 | |
| Example 11 | potassium carbonate | 0.1 or less | 11.10 | |
| Example 12 | sodium carbonate+sodium hydrogencarbonate (1 mass%) | 0.80 | 9.60 | |
| Example 13 | sodium carbonate+sodium hydrogencarbonate (3 mass%) | 1.20 | 9.10 | |
| Comparative 1 | ion-exchange water ²⁾ | 6.16 | 5.78 | |
| Comparative 2 | carboxylate amine salt ³⁾ | 6.18 | 7.52 | |
| Comparative 3 | benzoate amine salt | 6.19 | 9.91 | |
| Comparative 4 | benzoate sodium salt | 4.37 | 7.75 | |
| Comparative 5 | trisodium citrate | 2.91 | 8.12 | |
| Comparative 6 | sodium tartrate | 4.13 | 8.76 | |
| Comparative 7 | sodium chloride | 0.1 or less | 6.95 | corroded |
| Comparative 8 | calcium chloride | 0.21 | 6.55 | corroded |

| | | | | |
|---|---|---|---|---|
| 1) The concentration of each of the additives was set at 5 mass%. 2) No additive was added. 3) 30 mass% of an amine salt of carboxylic acid having 9 carbon atoms (a salt of carboxylic acid having an alkyl group having 8 carbon atoms and triethanolamine) was added. | | | | |

### Evaluation Result

It is understood from the results of Table 1 that each of the water-based coolants of the invention exhibits a significantly short characteristic time (second) and an extremely high cooling capability because of being an aqueous solution of a predetermined inorganic acid salt. Moreover, since a corrosive factor such as halogen is not contained, each of the water-based coolants of the invention does not corrode a metallic material. Accordingly, it can be understood that each of the water-based coolants of the invention is extremely effective for quenching and cutting the metallic material.

In general, a cooling capability of water is rapidly declined at 30 degrees C or more of a water temperature, thereby hampering quenching. The water-based coolant of the invention exhibits an excellent cooling capability even at 50 degrees C of a liquid temperature, which is a notable advantage.

In contrast, the ion-exchanged water of Comparative I without a predetermined inorganic acid salt of the invention does not exhibit a sufficient cooling capability. Moreover, when an inorganic acid salt different from the inorganic acid salt of the invention or an organic acid salt is added, a cooling capability cannot be improved. Further, since the additives of Comparatives 7 and 8 contain halogen, the obtained coolants are corrosive although exhibiting a high cooling capability.

### INDUSTRIAL APPLICABILITY

Since a coolant of the invention exhibits a high cooling capability but does not easily corrode a metallic material (a cooling object), the coolant of the invention is applicable as a quenching oil or a cutting oil for the metallic material.

## Claims

1. A water-based coolant comprising:
at least one inorganic acid salt selected from the group consisting of phosphate, phosphite, sulfate, sulfite, borate, molybdate, tungstate, carbonate, hydrogen carbonate and sesquicarbonate.

2. The water-based coolant according to claim 1, wherein
the inorganic acid salt is a metal salt of an inorganic acid.

3. The water-based coolant according to claim 2, wherein
the inorganic acid salt is at least one of a sodium salt, a potassium salt, a calcium salt and a magnesium salt.

4. The water-based coolant according to any one of claims 1 to 3, wherein
a content of the inorganic acid salt is in a range of 1 mass% to 20 mass% of a total amount of the coolant.

5. The water-based coolant according to any one of claims 1 to 4, wherein
the phosphate is at least one of orthophosphate, hydrogen phosphate, dihydrogenphosphate, polyphosphate and metaphosphate.

6. The water-based coolant according to any one of claims 1 to 5, wherein the water-based coolant is a quenching oil or a cutting oil.
